(19) Europäisches Patentamt

European Patent Office

Office européen des brevets

(11) **EP 1 039 660 A2**

(12) **EUROPÄISCHE PATENTANMELDUNG**

(43) Veröffentlichungstag:
27.09.2000 Patentblatt 2000/39

(51) Int. Cl.$^7$: **H04B 7/26**

(21) Anmeldenummer: **00200851.4**

(22) Anmeldetag: **10.03.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **19.03.1999 DE 19912556**

(71) Anmelder:
- **Philips Corporate Intellectual Property GmbH**
  **52064 Aachen (DE)**
  Benannte Vertragsstaaten:
  **DE**
- **Koninklijke Philips Electronics N.V.**
  **5621 BA Eindhoven (NL)**
  Benannte Vertragsstaaten:
  **ES FR GB IT SE**

(72) Erfinder:
- **Du, Yonggang,**
  **Philips Corp. Intell. Prop. GmbH**
  **52064 Aachen (DE)**
- **Baker, Matthew P.,**
  **Philips Corp. Intel. Prop. GmbH**
  **52064 Aachen (DE)**
- **Eilley, Edward S.,**
  **Philips Corp. Intel. Prop. GmbH**
  **52064 Aachen (DE)**

(74) Vertreter:
**Volmer, Georg, Dipl.-Ing.**
**Philips Corporate Intellectual Property GmbH,**
**Habsburgerallee 11**
**52064 Aachen (DE)**

(54) **Drahtloses Netzwerk mit einer Anwendertaktsynchronisation**

(57) Die Erfindung bezieht sich auf ein drahtloses Netzwerk mit mehreren Netzknoten mit jeweils einer Funkvorrichtung, welche jeweils eine Funktaktversorgung enthält und welche jeweils zum Datenaustausch über ein drahtloses Medium vorgesehen sind, und mit einer Anwenderschnittstelle zum Datenaustausch der zugeordneten Funkvorrichtung mit wenigstens einer Anwendung. Wenigstens eine Anwendung eines Netzknotens erhält einen vom Funktakt unabhängigen Anwendertakt von einer Anwendertaktversorgung des jeweiligen Netzknotens. Jeder Netzknoten ist zu von einem zentralen Netzknoten vorgegebenen Ereignissen zur Ermittlung eines auf den jeweiligen Anwendertakt bezogenen Zeitwerts vorgesehen. Der zentrale Netzknoten sendet wenigstens den zuletzt gebildeten Zeitwerts eines ausgewählten Netzknotens aus. Jeder Netzknoten bildet die Differenz der beiden zuletzt ermittelten Zeitwerte und synchronisiert die Frequenz seiner Anwendertaktversorgung in Abhängigkeit vom Vergleich der Differenz seiner beiden zuletzt ermittelten Zeitwerte mit der Differenz der beiden letzten Zeitwerte des ausgewählten Netzknotens.

FIG. 1

EP 1 039 660 A2

**Beschreibung**

Die Erfindung bezieht sich auf ein drahtloses Netzwerk mit mehreren Netzknoten mir jeweils einer Funkvorrichtung, welche jeweils eine Funktaktversorgung enthält und welche jeweils zum Datenaustausch über ein drahtloses Medium vorgesehen sind, und mit einer Anwenderschnittstelle zum Datenaustausch der zugeordneten Funkvorrichtung mit wenigstens einer Anwendung.

Ein solches drahtloses Netzwerk ist aus dem Dokument „Technologie drahtloser Netze" von Elmar Török, Funkschau Nr. 22, 1998, Seiten 20 bis 25 bekannt und beschreibt den Aufbau eines drahtlosen Netzwerkes mir mehreren Netzknoten. An eine Funkvorrichtung in einem Nerzknoten sind über eine Anwenderschnittstelle mehrere elektrische Geräte, z.B. Monitor, Computer etc. angeschlossen. Über die Funkvorrichtung jedes Netzknotens werden Daten mir anderen Funkvorrichtungen ausgetauscht. In diesem Dokument wird nicht auf eine Taktsynchronisation der in den Netzknoten laufenden Anwendungen Bezug genommen.

Der Erfindung liegt die Aufgabe zugrunde, ein drahtloses Netzwerk zu schaffen, bei welchen die Anwendertakte der einzelnen Netzknoten miteinander synchronisiert sind.

Diese Aufgabe wird durch ein drahtloses Netzwerk der eingangs genannten Art dadurch gelöst,

dass wenigstens eine Anwendung eines Netzknotens einen vom Funktakt unabhängigen Anwendertakt von einer Anwendertaktversorgung des jeweiligen Netzknotens erhalten,
dass jeder Netzknoten zu von einem zentralen Netzknoten vorgegebenen Ereignissen zur Ermittlung eines auf den jeweiligen Anwendertakt bezogenen Zeitwerts vorgesehen ist,
dass der zentrale Netzknoten wenigstens zur Aussendung des zuletzt gebildeten Zeitwerts eines ausgewählten Netzknotens vorgesehen ist und
dass jeder Nerzknoten zur Bildung der Differenz der beiden zuletzt ermittelten Zeitwerte vorgesehen ist und zur Frequenzsynchronisation seiner Anwendertaktversorgung in Abhängigkeit vom Vergleich der Differenz seiner beiden zuletzt ermittelten Zeitwerte mir der Differenz der beiden letzten Zeitwerte des ausgewählten Netzknotens vorgesehen ist.

Unter einer drahtlosen Übertragung ist eine Funk-, Infrarot-, Ultraschallübertragung etc. zu verstehen. Bei dem drahtlosen Netzwerk wird eine Synchronisation einer Anwendertaktversorgung in einem Netzknoten über den Funkweg realisiert. Die Funksynchronisation ist dabei unabhängig von der Synchronisation einer Anwendertaktversorgung. Um dies zu realisieren, werden von einem zentralen Netzknoten Ereignisse ausgelöst, die bewirken, dass in einem Netzknoten ein Zeitwert aus einem Anwenderzeitzähler ausgelesen wird, der einen Anwendertakt erhält. Außer der vom zentralen Netzknoten gesteuerten Auslösung eines Ereignisses werden von einem ausgewählten Netzknoten, der als Anwendermaster-Netzknoten bezeichnet wird, der zuletzt gebildete Zeitwert oder die Differenz der beiden zuletzt gebildeten Zeitwerte vom zentralen Netzknoten verteilt. In einem Netzknoten findet danach eine Differenzbildung der zuletzt ausgelesenen beiden Zeitwerte statt und ein Vergleich des lokalen Differenzergebnisses mit dem vom zentralen Netzknoten erhaltenen, vom Anwendermaster-Netzknoten stammenden Differenzergebnis statt. Da sich die Differenzergebnisse nicht auf den Funktakt beziehen, wird der Einfluss der Funktaktvariationen der Netzknoten auf die Zeit- und Frequenzsynchronisation der Anwendertaktversorgung eliminiert.

Patentanspruch 2 bezieht sich auf die Differenzbildung in einem Netzknoten durch Verwendung eines Anwenderzeitzählers. Der ausgewählten Netzknoten sollte in der Regel ein anderer Netzknoten als der zentrale Netzknoten sein. In diesem Fall übermittelt der Anwendermaster-Netzknoten (ausgewählter Netzknoten) Zeitdaten, die das Differenzergebnis des Anwendermaster-Netzknotens enthalten, wie Anspruch 3 beschreibt.

Die Ansprüche 4 und 5 geben den Korrekturwert für eine Anwendertaktversorgung an, die beispielsweise eine PLL-Schaltung (Phase Locked Loop) enthält. Hierbei kann eine Mittelwertbildung berücksichtigt werden, um Störungen bei der Übertragung der Zeitdaten zu verringern.

Der Anspruch 6 beschreibt Maßnahmen, wie die Anwendertaktversorgung eines Netzknotens (versteckter Netzknoten) von einem Zwischen-Netzknoten synchronisiert wird, wenn dieser Netzknoten nicht vom zentralen Netzknoten erreicht werden kann. Der versteckte Netzknoten ermittelt bei Auftreten eines speziellen Ereignisses dabei einen auf den Anwendertakt bezogenen Zeitwert. Das spezielle Ereignis wird beispielsweise über ein Funksynchronisationszeichen von dem Zwischen-Netzknoten übermittelt. Die Ansprüche 7 und 8 geben den Korrekturwert für eine Anwendertaktversorgung eines versteckten Netzknotens an.

Anspruch 9 geht auf Maßnahmen ein, wenn zwei Stab-Netzwerke mit je einem zentralen Netzknoten vorliegen und ein Stab-Netzwerk den Anwendermaster-Netzknoten enthält. Beide Sub-Netzwerke sind über einen zu beiden Sub-Netzwerken zugehörigen Brücken-Netzknoten verbunden. Der Netzknoten des zweiten Stab-Netzwerkes ermittelt bei Auftreten eines vorgegebenen Ereignisses dabei einen auf den Anwendertakt bezogenen Zeitwert. Das Ereignis wird beispielsweise über ein Funksynchronisationszeichen von dem zentralen Netzknoten des zweiten Stab-Netzwerks übermittelt. Die Ansprüche 10 und 11 geben den Korrekturwert für eine Anwendertaktversorgung eines Netzknotens des zweiten Stab-Netzwerks an.

Die Ansprüche 12, 13 und 14 beziehen sich auf die Bildung der absoluten Zeit für den Anwendertakt in einem Netzknoten eines einzelnen oder ersten Sub-Netzwerks, in einem versteckten Netzknoten und in einem Netzknoten eines zweiten Stab-Netzwerks.

Ausführungsbeispiele der Erfindung werden nachstehend anhand der Figuren näher erläutert. Es zeigen:

Fig. 1    ein drahtloses Netzwerk mit mehreren Netzknoten,
Fig. 2    ein Blockschaltbild eines Netzknotens mit einer externen Schnittstelle und an die externe Schnittstelle angeschlossenen Bussystems,
Fig. 3    ein Ausführungsbeispiel einer in dem Netzknoten nach Fig. 2 zu verwendenden Funkvorrichtung,
Fig. 4    zwei Funktionsblöcke zur Verdeutlichung der Funktion der Funkvorrichtung und Synchronisation der Anwendertaktversorgung,
Fig. 5    einen MAC-Rahmen zur Verdeutlichung des Übertragungsschemas von Zeitdaten,
Fig. 6    ein drahtloses Netzwerk mit einem versteckten Netzknoten und
Fig. 7    ein drahtloses Netzwerk mir zwei Sub-Netzwerken.

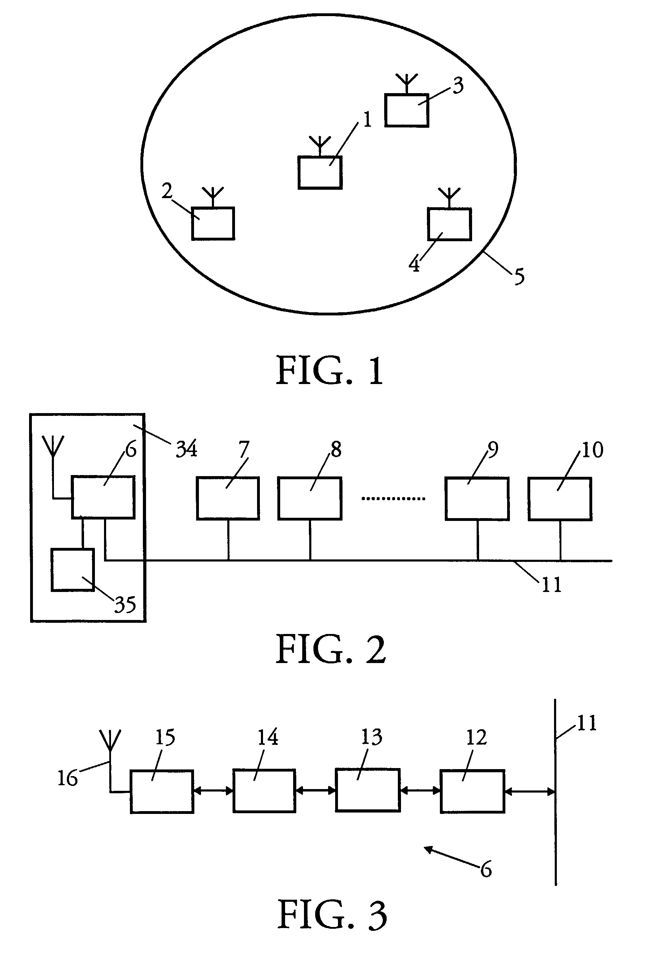

In Fig. 1 ist ein drahtloses Netzwerk mit mehreren Netzknoten 1 bis 4 dargestellt. Die Netzknoten 1 bis 4 tauschen mit Hilfe einer Funkvorrichtung jeweils Daten über Funkstrecken aus. Der Netzknoten 1, der die Funktion einer Basisstarion in einem drahtlosen Netzwerk hat, wird als zentraler Netzknoten bezeichnet und steuert die Funksynchronisation in dem drahtlosen Netzwerk. Die Netzknoten 2 bis 4 werden normale Netzknoten genannt. Der Bereich, in dem der zentrale Netzknoten 1 Daten mit den anderen Netzknoten 2 bis 4 austauschen kann, ist durch eine Ellipse 5 in der Fig. 1 angedeutet.

Ein Netzknoten 1 bis 4 enthält eine Funkvorrichtung, die jeweils Funkverbindungen zu anderen Netzknoten herstellt, und eine interne oder externe Anwenderschnittstelle, über die Anwenderdaten geliefert bzw. gelesen werden. Falls eine interne Anwenderschnittstelle vorliegt, werden die Anwenderdaten von elektrischen Schaltungselementen im Netzknoten erzeugt. Ein solches elektrisches Schaltungselement ist beispielsweise ein in dem Netzknoten enthaltener Video-Codec, der als Anwender über die interne Anwenderschnittstelle Daten mit der Funkvorrichtung austauscht. Falls eine externe Anwenderschnittstelle vorliegt, werden die Anwenderdaten über diese Anwenderschnittstelle von bzw. zu anderen elektrischen Geräten geliefert. Ein Anwender kann z.B. ein elektrisches Schaltungselement, ein elektrisches Gerät, ein auf einem oder mehreren elektrischen Schaltungselementen und/oder einem oder mehreren elektrischen Geräten auszuführendes Programmpaket etc. sein. Ein Anwender liegt außerhalb der Funkvorrichtung und verwendet die Funkvorrichtung, um Anwenderdaten mit anderen Anwendern auszutauschen.

In Fig. 2 ist ein Beispiel für eine externe Anwenderschnittstelle in Form eines Bussystems 11 gezeigt, über das mehrere elektrische Geräte 7 bis 10 Nutz-, Steuer- und Bussynchronisationsdaten mir einer Funkvorrichtung 6 eines Netzknotens 34 austauschen. Ein solches elektrisches Gerät 7 bis 10 kann ein Videorecorder, ein Monitor, ein Tuner, ein CD-Spieler etc. sein.

Um Echtzeit-Anwendungen effizient zu unterstützen, enthalten die Netzknoten 1 bis 4 jeweils eine lokale Anwendertaktversorgung 35 (vgl. Fig. 2). Diese lokale Anwendertaktversorgung 35 ist für die gesamte Zeit- und Frequenzsynchronisation der elektrischen Schaltungskomponenten und Geräte 7 bis 10 erforderlich und dient somit zur Versorgung der Anwendungen in den jeweiligen Netzknoten 1 bis 4 mit einem Takt, der im folgenden als Anwendertakt bezeichnet wird.

Eine Funkvorrichtung 6 enthält noch eine nicht näher dargestellte Funktaktversorgung zur Erzeugung eines Funktaktes, der unabhängig vom Anwendertakt ist. In einem drahtlosen Netzwerk ist üblicherweise eine Funktaktversorgung eines Netzknotens auf den Funktakt des zentralen Netzknotens 1 synchronisiert. Auf die Synchronisation einer Funktaktversorgung wird im folgenden nicht näher eingegangen. Es wird vorausgesetzt, dass eine Frequenzsynchronisation der Funktaktversorgungen erfolgt ist.

Eine lokale Anwendertaktversorgung in einem Netzknoten ist auf eine lokale Anwendertaktversorgung eines bestimmten als Anwendermaster-Netzknoten bezeichneten Netzknotens zu synchronisieren. Dieser Anwendermaster-Netzknoten, dessen Anwendertakt auch als Masteranwendertakt bezeichnet wird, ist beispielsweise der Netzknoten 2. In der Regel weist der zentrale Netzknoten nicht die Funktion des Anwendermaster-Netzknoten auf, d.h. Anwendermaster- und zentraler Netzknoten sind zwei unterschiedliche Netzknoten. Diese Trennung ist deshalb sinnvoll, weil der zentrale Netzknoten hauptsächlich für die Funksynchronisation und nicht für die Synchronisation einer den jeweiligen Anwendertakt erzeugenden lokalen Anwendertaktversorgung verantwortlich ist. Es ist aber nicht auszuschließen, dass der zentrale Netzknoten in bestimmten Fällen auch der Anwendermaster-Netzknoten ist.

Im folgenden wird beschrieben, wie die lokalen Anwendertaktversorgungen in den Netzknoten 1, 3 und 4 auf den im Netzknoten 2 erzeugten Masteranwendertakt mit Hilfe von vom zentralen Netzknoten 1 ausgesendeten Funksynchronisationszeichen synchronisiert werden. Ein solches Funksynchronisationszeichen kann beispielsweise aus einer Folge von mehreren Bits bestehen. Zwischen der Startzeit eines Funksynchronisationszeichens und der Anwendertaktversorgung des Anwendermaster-Netzknotens 2 muss hierbei keine feste zeitliche Beziehung bestehen, da der Masteranwendertakt selbst nicht ausgesendet werden muss. Zum Beispiel ist es möglich, dass eine Folge von Funksynchronisationszeichen während unregelmäßiger Zeitpunkte auftritt. Allerdings darf der Zeitabstand zwischen zwei aufeinanderfolgenden Funksynchronisationszeichen ein Maximum nicht überschreiten, da sonst die Abweichungen der jeweiligen von den lokalen Anwendertaktversorgungen erzeugten Anwendertakte zu groß werden könnten. Ferner wird erreicht, dass der Anwendermaster-Netzknoten 2 selbst keine Funksynchronisationszeichen erzeugen muss. Der Anendermaster-Netzknoten 2 sendet in der Regel asynchron zu den Funksynchronisationseichen Zeitdaten aus, die Informationen über den Masteranwendertakt angeben. Diese Zeitdaten werden zunächst als normale Nutzdaten vom zentralen Netzknoten 1 empfangen und dann an alle anderen Netzknoten 2 bis 4 weiter verteilt. Die Verteilung der Zeitdaten des Anwendermaster-Netzknotens 2 wird von dem zentralen Netzknoten 1 durchgeführt, weil im allgemeinen nicht angenommen werden kann, dass der Anwenderaster-Netzknoten 2 alle anderen Netzknoten 3 und 4 direkt erreichen kann, sondern nur den zentralen Netzknoten 1.

Eine zeitlich genaue Synchronisation einer lokalen Anwendertaktversorgung eines Netzknotens 1, 3 und 4 mit der lokalen Anwendertaktversorgung des Anwendermaster-Netzknotens 2 kann aber nur unter der Voraussetzung erfolgen, dass von später zu beschreibenden Schaltelementen erzeugte Zeitwerte (z.B. von einem Zähler) der Netzknoten 1 bis 4 zu gleichen Zeitpunkten erzeugt werden können. Nur dann kann der Vergleich der Zeitwerte des Anwendermaster-Netzknotens 2 mit den Zeitwerten des zentralen Netzknotens 1 und der normalen Netzknoten 3 oder 4 zu auswertbaren Ergebnissen führen. In einem Netzknoten 1 bis 4 werden die Funksynchronisationszeichen beispielsweise mittels eines Filters (z.B. Matched-Filters) ausgewertet. Ein solches Matched-Filter liefert einen Funksynchronisationsimpuls, dessen Maximalwert zur Bestimmung der auf den jeweiligen lokalen Anwendertakt bezogenen Zeitwerte benutzt wird.

Die im folgenden darzustellende Methode zur Frequenzsynchronisation der lokalen Anwendertaktversorgungen setzt nur voraus, dass alle Netzknoten 2 bis 4 die Funksynchronisationszeichen von zentralen Netzknoten 1 empfangen können und dass die Netzknoten 1, 3 und 4 die auf den Masteranwendertakt bezogenen Zeitdaten vom Anwendermaster-Netzknoten 2 empfangen können. Eine solche Anwendertaktversorgung wird beispielsweise mittels einer PLL-Schaltung eingestellt (PLL = Phase Locked Loop). Der zentrale Netzknoten 1 empfängt diese Zeitdaten direkt vom Anwendermaster-Netzknoten 2, und die normalen Netzknoten 3 und 4 empfangen die Zeitdaten indirekt vom Anwendermaster-Netzknoten 2 über den zentralen Netzknoten 1. Die Funkvorrichtungen 6 in den Netzknoten 1 bis 4 ermöglichen die Übertragung der Funksynchronisationszeichen vom zentralen Netzknoten 1 und die Übertragung, Verteilung sowie Verarbeitung der Zeitdaten des Anwendermaster-Netzknotens 2.

Ein Ausführungsbeispiel einer Funkvorrichtung 6 zeigt Fig. 3. Eine externe Schnittstellenschaltung 12 der Funkvorrichtung 6 ist an das Bussystem 11 angeschlossen und empfängt die für die Funkvorrichtung 6 bestimmten Anwenderdaten vom Bussystem 11 und liefert diese gegebenenfalls nach einer Formatanpassung an eine Protokollvorrichtung 13 der Funkvorrichtung 6. Ferner führt die Schnittstellenschaltung 12 von der Protokollvorrichtung 13 gelieferte Anwenderdaten zum Bussystem 11. Außer der Schnittstellenschaltung 12 und der Protokollvorrichtung 13 enthält die Funkvorrichtung 6 noch ein Modem 14, eine Hochfrequenzschaltung 15 und eine Antenne 16. Von der Antenne 16 empfangene Daten sendet die Hochfrequenzschaltung 15 über das Modem 14 zur Protokollvorrichtung 13. Ferner strahlt die Antenne 16 von der Protokollvorrichtung 13 stammende und von dem Modem 14 und der Hochfrequenzschaltung 15 weitergeleitete Daten aus.

Die Protokollvorrichtung 13, die beispielsweise als Prozessorsystem ausgebildet ist, bildet aus den von der Schnittstellenschaltung 12 gelieferten Daten Paketeinheiten oder aus den vom Modem 14 zugeführten Paketeinheiten für die Schnittstellenschaltung 12 verarbeitbare Daten. Eine Paketeinheit enthält außer den empfangenen Daten zusätzliche von der Protokollvorrichtung 13 gebildete Steuerinformationen. Die Protokollvorrichtung 13 verwendet Protokolle für die LLC-Schicht (LLC = Logical Link Control) und die MAC-Schicht (MAC = Medium Access Control). Die MAC-Schicht steuert den Mehrfachzugriff einer Funkvorrichtung 6 zum Funkübertragungsmedium und die LLC-Schicht führt eine Fluss- und Fehlerkontrolle durch.

In dem drahtlosen Netzwerk nach Fig. 1 können die Daten zwischen den Netzknoten 1 bis 4 nach einem TDMA-, FDMA- oder CDMA-Verfahren (TDMA = Time Division Multiplex Access, FDMA = Frequency Division Multiplex Access, CDMA = Code Division Multiplex Access) ausgetauscht werden. Die Verfahren können auch kombiniert werden. Daten werden in bestimmten zugewiesenen Kanälen übertragen. Ein Kanal ist durch einen Frequenzbereich, einen Zeitbereich und z.B. beim CDMA-Verfahren durch einen Spreizungscode bestimmt

Die normalen Netzknoten 2 bis 4 werden in dem drahtlosen Netzwerk von dem zentralen Netzknoten 1 gesteuert. Der Anwendermaster-Netzknoten 2 gehört deshalb zu den normalen Netzknoten, da er nicht für die Funksynchronisation des Netzwerks zuständig ist. Das bedeutet, dass in dem zentral gesteuertem drahtlosen Netzwerk nur der zentrale Netzknoten die Funksynchronisation, den Mehrfachzugriff (medium access control), den Verbindungsaufbau etc. steuert. Der Anwendermaster-Netzknoten 2 steuert dagegen die Synchronisation für die Echtzeitanwendungen, die über das drahtlose Netzwerk verteilt laufen.

Jeder Netzknoten 1 bis 4 enthält einen Anwenderzeitzähler, der von der jeweiligen lokalen Anwendertaktversorgung Taktimpulse erhält. Mit Hilfe der Anwenderzeitzähler ist in jedem Netzknoten 1 bis 4 die lokale Anwendertaktversorgung auf die Frequenz und ggf. die absolute Zeit der Anwendertaktversorgung des Anwendermaster-Netzknotens 2 zu synchronisieren. Dazu werden die Werte, die als Zeitwerte bezeichnet werden, der jeweiligen Anwenderzeitzähler der Netzknoten 1 bis 4 zu bestimmten, allen Netzknoten 1 bis 4 bekannten Ereignissen (events) ausgelesen und danach miteinander verglichen. Der Vergleich kann asynchron erfolgen, d.h. der Vergleich muss nicht sofort zu einem bestimmten Zeitpunkt im Anschluss an das Ereignis erfolgen. Als Ereignis wird das Auftreten eines vorgegebenen Kriteriums eines empfangenen Funksignals bezeichnet.

Für die Funkübertragung von Daten zwischen den Netzknoten 1 bis 4 wird zumindest noch in der MAC-Schicht ein rahmensynchronisiertes Signal verwendet. Dieser Rahmen weist verschiedene Zeitschlitze für Funksynchronisations-, Steuer- und Nutzdaten auf und wird als MAC-Rahmen bezeichnet. Der zentrale Netzknoten 1 sendet während eines vorgegebenen Zeitraumes des MAC-Rahmens (beispielsweise am Anfang jedes MAC-Rahmens) von den anderen Netzknoten 2 bis 4 eindeutig zu detektierende Funksynchro-. nisationszeichen. Das Funksynchronisationszeichen wird beispielsweise alle q MAC-Rahmen ($q \geq 1$, $q \in N$) vom zentralen Netzknoten 1 gesendet. Die aufeinanderfolgenden MAC-Rahmen können eine feste oder jeweils unterschiedliche Länge aufweisen. Im letztgenannten Fall darf ein MAC-Rahmen aber eine bestimmte vorgegebene maximale Länge nicht überschreiten, die von der durch die Güte der PLL-Schaltung bedingten tolerierbaren maximalen Abweichung der lokalen Anwendertaktversorgungen abhängt. Auch sollte der Wert q so gewählt werden, dass die Synchronisation der Anwendertaktversorgungen mit dem Masteranwendertakt gewährleistet ist.

Zur Frequenzsynchronisation der lokalen Anwendertaktversorgungen sind in jedem Netzknoten 1 bis 4 zwei Register zur Speicherung von Zeitwerten enthalten. Ein erstes Register speichert einen ersten Zeitwert $R1(N_i)$, der dem auf den Anwendertakt bezogenen Empfangszeitpunkt des vorletzten Funksynchronisationszeichens entspricht, und das zweite Register einen Zeitwert $R2(N_i)$, der dem auf den Anwendertakt bezogenen Empfangszeitpunkt des letzten Funksynchronisationszeichens entspricht. Hierbei muss gewährleistet werden, dass der erste Zeitwert $R1(N_i)$ und der zweite Zeitwert $R2(N_i)$ nach einer konstanten Verzögerungszeit $\tau$ nach dem Vorliegen des Maximalwertes des aus dem Funksynchronisationszeichen gebildeten Funksynchronisationsimpulses aus dem Anwenderzeitzähler ausgelesen werden. Damit wird erreicht, dass $R1(N_i)$ bzw. $R2(N_i)$ von allen Netzknoten 1 bis 4 zu Zeitpunkten, die um eine konstante Verzögerungszeit verschobenen sind, aus den jeweiligen Registern ausgelesen werden. Der Maximalwert wird, wie oben erwähnt, beispielsweise von einer dem Matched-Filter nachgeschalteten Detektionsschaltung detektiert. $N_i$ gibt den Netzknoten i (i = 1, 2, ...) an, der die Speicherung der Zeitpunkte in den Registern durchführt. Die in einem normalen Netzknoten 2 bis 4 gebildete Differenz $R2(N_i) - R1(N_i)$ mit i =2 bis 4 gibt dann die Differenz zwischen den auf den Anwendertakt bezogenen Empfangszeitpunkten der beiden zuletzt empfangenen Funksynchronisationszeichen des zentralen Netzknotens 1 an. Auch der zentrale Netzknoten 1 bildet die Differenz $\delta_1 = R2(N_i) - R1(N_1)$ eine bestimmte Zeit nach dem Start des Funksynchronisationszeichens, die den Empfangszeitpunkt des Funksynchronisationszeichens in dem normalen Netzknoten entspricht. Durch die Differenzbildung hat die konstante Verzögerungszeit $\tau$ keinen Einfluss auf den Synchronisationsvorgang. Wenn eine lokale Anwendertaktversorgung und somit ein Anwenderzeitzähler mit der Anwendertaktversorgung eines Netzknotens $N_i$ (i = 1, 3, 4) mit dem Anwenderzeitzähler des Anwendermaster-Netzknotens 2 synchronisiert ist, weist die in dem Anwendermaster-Netzknoten 2 gebildete Differenz $R2(N_2) - R1(N_2)$ keinen Unterschied zu der in einem normalen Netzknoten 1, 3 und 4 gebildeten Differenz $R2(N_i) - R1(N_i)$ mit i = 1, 3 und 4 auf.

Die Synchronisation der lokalen Anwendertaktversorgungen in dem drahtlosen Netzwerk wird auf folgende Art durchgeführt. Ein Netzknoten 2, 3 und 4 speichert nach Empfang eines Funksynchronisationszeichens des zentralen Netzknotens 1 den auf den Anwendertakt bezogenen Zeitpunkt des Empfangs des Funksynchronisationszeichens in seinem jeweiligen zweiten Register als Zeitpunkt $R2(N_i)$. Dieser Zeitpunkt wird als Zählerwert aus dein jeweiligen Anwenderzeitzähler in das zweite Register eingeschrieben. Zuvor ist der Inhalt oder Zeitpunkt des zweiten Registers $R2(N_i)$ in das erste Register verschoben worden und wird als Zeitpunkt $R1(N_i)$ bezeichnet. Der Netzknoten 1 kann ebenfalls den auf seinen Anwendertakt bezogenen Zeitpunkt $R2(N_i)$ berechnen, da dieser den Zeitabstand zwischen dem Start eines Funksynchronisationszeichens und dem Maximalwert dieses aus dem Funksynchronisationszeichen mit Hilfe des Matched-Filters gebildeten Funksynchronisationsimpulses kennt.

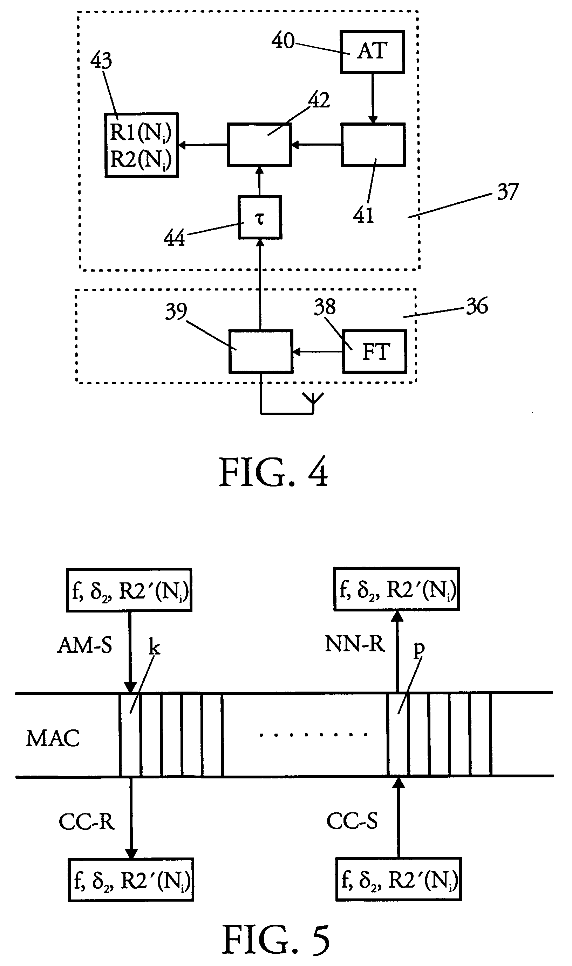

Diese Vorgänge lassen sich anhand des Funktionsbildes der Fig. 4 verdeutlichen, das zwei Blöcke 36 und 37 zeigt. Der erste Block 36 bezieht sich auf eine Funkvorrichtung 6 in einem Netzknoten 1 bis 4 und der zweite Block 37 auf die Auswertung der Zählerwerte eines Anwenderzeitzählers. In dem Block 36 sind zwei Blöcke 38 und 39 enthalten. Der Block 38, der die Funktion der Funktaktversorgung angibt, liefert den Funktakt FT und der Block 39 wertet das über den Funkweg empfangene Funksynchronisationszeichen aus. Als Zeitpunkt des Empfangs des Funksynchronisationszeichens wird der Maximalwert des aus dem Funksynchronisationszeichen gebildeten Funksynchronisationsimpulses dem Block 37 geliefert. Der Block 37 enthält fünf weitere Blöcke 40 bis 44. Der Block 40 stellt die Anwendertaktversorgung dar und liefert einen Anwendertakt zu dem Block 41. Der Block 41 ist ein Anwenderzeitzähler, der mit jedem Anwendertakt seinen Zählerwert inkrementiert. Der Block 42 liest einen Zählerwert aus dem Anwenderzeitzähler (Block 41) aus, wenn vom Block 39 ein durch ein eingetroffenes Funksynchronisationszeichen ausgelöster Freigabeimpuls geliefert wird. Der Freigabeimpuls wird von einer Detektionsschaltung dann gebildet, wenn der Maximalwert des vom Matched-Filter Funksynchronisationsimpulses erreicht ist Der ausgelesene Zählerwert wird von dem Block 42 in das zweite Register als Zählerwert $R2(N_i)$ geschrieben. Zuvor hat der Block den alten Zählerwert als Zählerwert $R1(N_i)$ in das erste Register geschrieben. Durch die Verarbeitung der unterschiedlichen Signale in den Blöcken 36 und 37 entsteht eine netzknotenspezifische Verzögerung $\tau$ zwischen dem Auslesezeitpunkt des Anwenderzählers und dem Empfangszeitpunkt des Maximalwertes des Funksynchronisationsimpulses. Diese Zeitverzögerung symbolisiert der Block 44, der zwischen den Blöcken 39 und 42 angeordnet ist.

In dem Anwendermaster-Netzknoten 2 wird nach Empfing eines Funksynchronisationszeichens des zentralen Netzknotens 1 die Differenz $\delta_2 = R2(N_2) - R1(N_2)$ gebildet und das Differenzergebnis über eine Funkeinzelverbindung als Zeitdaten zum zentralen Netzknoten 1 gesendet Hierbei wird der Zeitabstand zwischen dein Start des sich aus dem Funksynchronisationszeichen ergebenden Funksynchronisationsimpulses und dem Maximalwert des Funksynchronisationsimpulses berücksichtigt, weil der zentrale Netzknoten 1 in der Regel nicht gleichzeitig senden und empfangen kann. Für die Übertragung des Differenzergebnisses $\delta_2$ kann ein bestimmter Zeitschlitz des MAC-Rahmens verwendet werden. Der zentrale Netzknoten 1 vergleicht den Differenzwert $\delta_2$ mir seinem eigenen Differenzergebnis $\delta_1 = R2(N_i) - R1(N_i)$. Wenn $\delta_2 > \delta_1$ ist, muss der zentrale Netzknoten 1 den Takt seiner lokalen Anwendertaktversorgung um den Wert $(\delta_2 - \delta_1)/\delta_2$ erhöhen. Der Takt der Anwendertaktversorgung des zentralen Netzknotens 1 wird um den Wert $(\delta_1 - \delta_2)/\delta_2$ vermindert, wenn der zentrale Netzknoten 1 feststellt, dass $\delta_2 < \delta_1$ ist. Keine Änderung des Anwendertaktes einer lokalen Anwendertaktversorgung ist erforderlich, wenn die Differenzwerte $\delta_2$ und $\delta_1$ gleich sind.

Zur Synchronisation einer lokalen Anwendertaktversorgung eines normalen Netzknotens 3 oder 4 sendet der zentrale Netzknoten 1 während des MAC-Rahmens den Differenzwert $\delta_2$ als Zeitdaten aus. Beispielsweise werden die Zeitdaten während eines bestimmten Zeitschlitzes dieses MAC-Rahmens über Funkverteilverbindungen ausgesendet, d.h. für jeden normalen Netzknoten 2 bis 4 sind diese Zeitdaten bestimmt. Jeder normale Netzknoten 3 und 4 bis auf den Anwendermaster-Netzknoten vergleicht nach Empfing des Differenzwertes $\delta_2$ und nach einer Differenzbildung der in den jeweiligen eigenen Registern gespeicherten Zeitpunkte $R1(N_i)$ und $R2(N_i)$ mit i = 3 oder 4 den empfangen Differenzwert $\delta_2$ mit dem berechneten Differenzwert $\delta_3$ bzw. $\delta_4$. Wenn $\delta_2 > \delta_3$ bzw. $\delta_2 > \delta_4$ ist, erhöht ein normaler Netzknoten 3 oder 4 den lokalen Takt seiner Anwendertaktversorgung um den Wert $(\delta_2 - \delta_i)/\delta_2$ mit i = 3 oder 4. Im anderen Fall, wenn $\delta_2 < \delta_i$ ist, vermindert ein normaler Netzknoten 3 oder 4 den lokalen Anwendertakt um den Wert $(\delta_i - \delta_2)/\delta_2$ mit i = 3 oder 4. Bei Gleichheit der Differenzwerte $\delta_2$ und $\delta_3$ bzw. $\delta_4$ weist der lokale Anwendertakt eines normalen Netzknotens 3 oder 4 genau die Frequenz der lokalen Anwendertaktversorgung des Anwendermaster-Netzknotens 2 auf.

Die oben beschriebene Übertragung der Zeitdaten im lokalen Netzwerk lässt sich mit Hilfe der Fig. 5 weiter veranschaulichen, die einen MAC-Rahmen zeigt. Während eines ersten Zeitschlitzes k (k $\in$ N) des MAC-Rahmens werden von dem Anwendermaster-Netzknoten 2 als Zeitdaten der in dem Anwendermaster-Netzknoten 2 gebildete Differenzwert $\delta_2$, eine den MAC-Rahmen kennzeichnende Rahmenkennzeichnung f und gegebenenfalls der zuletzt aus dem Anwenderzeitzähler des Anwendermaster-Netzknotens 2 ausgelesene und um die Verzögerungszeit $\tau$ korrigierte Zeitwert $R2'(N_2) = R2(N_2) - \tau$ zum zentralen Netzknoten 1 gesendet. Der korrigierte Zeitwert $R2'(N_2)$ ist für die später dargestellte Berechnung der absoluten Zeit im drahtlosen Netzwerk erforderlich. In der Fig. 5 ist der Sendevorgang des Anwendermaster-Netzknotens 2 mit AM-S und der Empfangsvorgang des zentralen Netzknotens 1 mit CC-R gekennzeichnet. Die von dem zentralen Netzknoten 1 empfangenen Zeitdaten werden während eines darauffolgenden Zeitschlitzes p (p > k, p $\in$ N) des MAC-Rahmens an die anderen normalen Netzknoten 3 und 4 verteilt. Dieser Sendevorgang des zentralen Netzknotens 1 während des MAC-Rahmens m wird mit CC-S und der Empfangsvorgang der normalen Netzknoten 3 und 4 mit NN-R bezeichnet.

Aufgrund der Differenzbildung in den Netzknoten 1 bis 4 haben weder die konstante Verzögerungszeit $\tau$ einen Einfluss auf die Synchronisation noch die Entfernung zwischen den Netzknoten 1 bis 4 (Laufzeitverzögerung). Es ist nicht erforderlich, dass das Funksynchronisationszeichen am Anfang eines MAC-Rahmens ausgesendet wird. Ferner ist es auch nicht erforderlich, dass das Funksynchronisationszeichen bei jedem MAC-Rahmen von dem zentralen Netzknoten erzeugt wird.

Der Anwenderzeitzähler und das erste und zweite Register können diskrete Bauelemente und beispielsweise Bestandteil einer eigenen Schaltung sein, die auch ein weiteres Schaltelement zur Differenzbildung und Vergleich mit anderen Differenzwerten enthält. Vorteilhaft ist es aber, auf existierende Schaltelemente zurückzugreifen. Die Schnittstellenschaltung 12 in jeder Funkvorrichtung 6, die beispielsweise als Prozessorsystem ausgebildet ist kann die Funktionen des Anwenderzeitzählers, des ersten und zweiten Registers und die Berechnungsfunktionen übernehmen. Nach der Berechnung des Differenzwerts liefert die Schnittstellenschaltung 12 dann ggf. einen Frequenzkorrekturwert an die zugeordnete Anwendertaktversorgung. Das Matched-Filter und die Detektionsschaltung können beispielsweise Teil des Modems 14 sein. Bezogen auf die Fig. 4 ist die Funktion des Anwenderzeitzählers, des ersten und zweiten Registers und die Berechnungsfunktion Bestandteil des Blocks 37. Die Funktion des Matched-Filters und der Detektionsschaltung ist Teil des Blocks 36.

Die Synchronisation der lokalen Anwendertaktversorgungen kann auch über eine Mittelwertbildung von mehreren Zeitwerten durchgeführt um Auswirkungen von Schwankungen bei der Übertragung der Zeitdaten zu reduzieren. Hierbei muss in einem Netzknoten 1 bis 4 folgende Formel berechnet werden:

$$\frac{\Delta_1 - \Delta_2}{\Delta_2} = \frac{\left[\left(\sum_{j=n-N}^{n-1}\delta_{1,j}\right)+\delta_{1,n}\right]-\left[\left(\sum_{j=n-N}^{n-1}\delta_{2,j}\right)+\delta_{2,n}\right]}{\left(\sum_{j=n-N}^{n-1}\delta_{2,j}\right)+\delta_{2,n}}$$

Hierbei ist $\Delta_i$ die Summe der Differenzwerte eines Netzknotens i mit i = 1, 3 oder 4, $\Delta_2$ die Summe der Differenzwerte des Anwendermaster-Netzknotens 2, $\delta_{i,j}$ ein Differenzwert eines Netzknotens i zum Zeitpunkt j und $\delta_{2,j}$ ein Differenzwert des Anwendermaster-Netzknotens 2 zum Zeitpunkt j. N gibt die Anzahl der Differenzwerte die zur Mittelwertbildung berücksichtigt werden (z.B. N = 500). Der Index n ist der Index für den zuletzt gebildeten Differenzwert $\delta_{i,n}$ bzw. $\delta_{2,n}$. Durch diese Mittelwertbildung wird die Synchronisation unempfindlich gegen Störungen bei der Übertragung der Zeitdaten und gegenüber einem Jittereffekt bei dem Auslesevorgang aus dem jeweiligen Anwenderzeitzähler. Beispielsweise können in der Schnittstellenschaltung 12 in jeder Funkvorrichtung 6 für diese Mittelwertbildung noch zusätzliche Register bzw. Speicher enthalten sein.

Anstelle der Übertragung eines Differenzwertes $\delta_2$ als Zeitdaten kann auch nur der Zeitwert R2($N_2$) des Anwendermaster-Netzknotens übertragen werden. Der zentrale Netz-. knoten 1 und die normalen Netzknoten 3 und 4 berechnen dann anstelle des Anwendermaster-Netzknotens 2 den Differenzwert $\delta_2$ aus den beiden zuletzt empfangenen Zeitwerten R2($N_2$). Beispielsweise können in der Schnittstellenschaltung 12 in jeder Funkvorrichtung 6 für diese Differenzbildung noch zusätzliche Register enthalten sein.

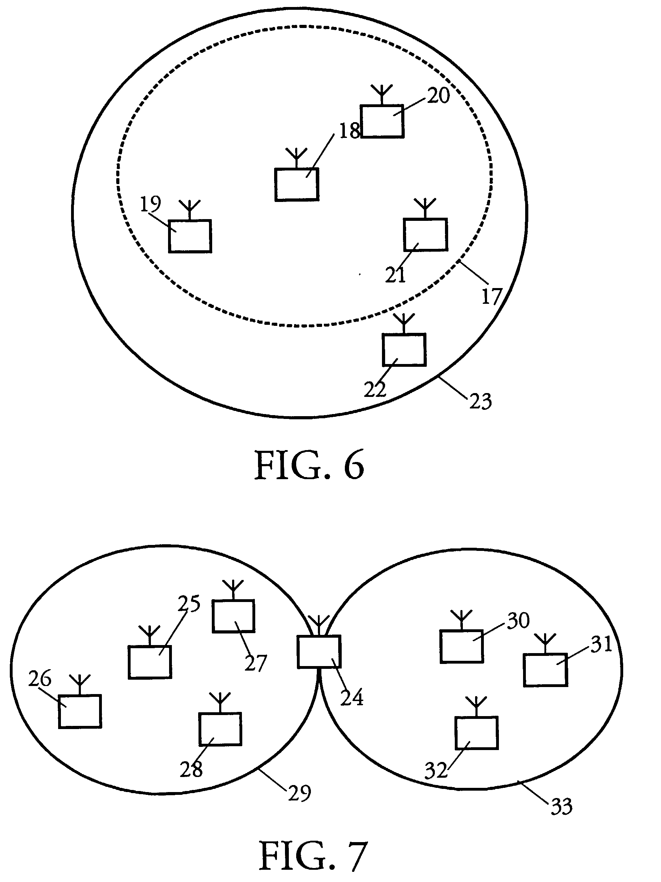

Die Synchronisation einer Anwendertaktversorgung eines normalen Netzknotens kann auch durchgeführt werden, wenn der normale Netzknoten nicht direkt Daten von dem zentralen Netzknoten empfangen kann. Diese Situation ist in Fig. 6 dargestellt. Innerhalb der mit einer gestrichelten Linie gezeichneten Ellipse 17 können die Netzknoten 18 bis 21 Daten über Funkstrecken austauschen. In Fig. 6 ist der Netzknoten 18 der zentrale Netzknoten, der Netzknoten 19 ist der Anwendermaster-Netzknoten (und zugleich auch ein normaler Netzknoten) und die Netzknoten 20 und 21 sind normale Netzknoten. Außerhalb der Ellipse 17 befindet sich ein weiterer normaler Netzknoten 22, der keine Daten von dem zentralen Netzknoten 18 empfangen kann. Das gesamte drahtlose Netzwerk ist durch eine mit einer durchgezogenen Linie gezeichneten Ellipse 23 in Fig. 6 dargestellt.

Der normale Netzknoten 22 wird außerdem noch als versteckter Netzknoten bezeichnet, weil er keine Daten von dem zentralen Netzknoten 18 aber Daten über eine Funkstrecke von dem normalen Netzknoten 21 empfangen kann. Der normale Netzknoten 21 wird auch als Zwischen-Netzknoten bezeichnet, weil dieser Daten von dem zentralen Netzknoten 18 zum versteckten Netzknoten 22 übertragen kann.

Die Synchronisation der lokalen Anwendertaktversorgung des versteckten Netzknotens 22 auf den Anwendertakt des Anwendermaster-Nerzknotens 19 wird auf folgende Weise durchgeführt. Wenn der Anwendertakt des Zwischen-Netzknotens 21 mit dem Masteranwendertakt des Anwendermaster-Netzknotens 19 nach dem oben beschriebenen Schema synchronisiert ist, erzeugt der Zwischen-Netzknoten ähnliche Funksynchronisationszeichen (spezielle Funksynchronisationszeichen) wie der zentrale Netzknoten 1. Ein solches spezielles Funksynchronisationszeichen kann ebenfalls aus einer Folge von mehreren Bits bestehen, die während eines vorgegebenen Zeitschlitzes des MAC-Rahmens ausgesendet werden. Dieses spezielle Synchronisationszeichen wird beispielsweise alle q MAC-Rahmen (q ≥ 1, q∈ N) von dem Zwischen-Netzknoten 21 gesendet. Der Wert q sollte so gewählt werden, dass die Synchronisation der Anwendertaktversorgung des versteckten Netzknotens 22 mit Hilfe einer PLL-Schaltung mit dem Masteranwendertakt gewährleistet ist.

Wenn der versteckte Netzknoten 22 ein spezielles Funksynchronisationszeichen von dem Zwischen-Netzknoten 21 empfangen hat, schiebt dieser den in dem zweiten Register abgelegten auf den Anwendertakt bezogenen Zeitwert R1($N_{22}$) in das erste Register und speichert den vom Anwenderzeitzähler gelieferten Zeitwert R2($N_{22}$) des Eintreffens des speziellen Funksynchronisationszeichens (Maximalwert des aus dem speziellen Funksynchronisationszeichens gebildeten speziellen Funksynchronisationsimpulses) im zweiten Register. Anschließend berechnet der versteckte Netzknoten 22 die Differenz $\delta_{22}$ = R2 ($N_{22}$) - R1($N_{22}$). Der Zwischen-Netzknoten 21 berechnet nach Aussendung des speziellen Funksynchronisationszeichens die Differenz $\delta_{21}$ = R2($N_{21}$) - R1($N_{21}$). Hierbei wird der Zeitabstand zwischen dem Start eines speziellen Funksynchronisationszeichens und dem Maximalwert des sich aus dem speziellen Funksynchronisationszeichen ergebenden speziellen Funksynchronisationsimpulses berücksichtigt, weil der Zwischen-Netzknoten 21 in der Regel nicht gleichzeitig senden und empfangen kann. Der Zwischen-Netzknoten 21 sendet die Zeitdaten $\delta_{21}$ zu einem späteren Zeitpunkt als das Funksynchronisationszeichen. Dieser Zeitpunkt kann z.B. zwischen den Sende-Zeitpunkten von zwei speziellen Funksynchronisationszeichen liegen. Nach Empfang der Zeitdaten $\delta_{21}$, vergleicht der versteckte Netzknoten 22 die Differenzwerte $\delta_{21}$ und $\delta_{22}$. Wenn $\delta_{21} > \delta_{22}$ ist, muss die lokale Anwendertaktversorgung des versteckten Netzknotens 22 um den Wert $(\delta_{21} - \delta_{22})/\delta_{21}$ erhöht werden.

Wenn $\delta_{21} < \delta_{22}$ ist, muss die lokale Anwendertaktversorgung um den Wert $(\delta_{22} - \delta_{21})/\delta_{21}$ vermindert Bei Gleichheit der beiden Differenzwerte $\delta_{21}$ und $\delta_{22}$ ist die lokale Anwendertaktversorgung des versteckten Netzknotens 22 mit dem Anwendertakt des Zwischen-Netzknotens 21 und damit indirekt mit dem Masteranwendertakt des Anwendermaster-Netzknotens 19 synchronisiert.

Auch für einen versteckten Netzknoten lässt sich eine Mittelwertbildung gemäß folgender Formel durchführen:

$$\frac{\Delta_{22} - \Delta_{21}}{\Delta_{21}} = \frac{\left[\left(\sum_{j=n-N}^{n-1}\delta_{22,j}\right) + \delta_{22,n}\right] - \left[\left(\sum_{j=n-N}^{n-1}\delta_{21,j}\right) + \delta_{21,n}\right]}{\left(\sum_{j=n-N}^{n-1}\delta_{21,j}\right) + \delta_{21,n}}$$

Hierbei ist $\Delta_{21}$ die Summe der Differenzwerte des Netzknotens 21, $\Delta_{22}$ die Summe der Differenzwerte des Netzknotens 22, $\delta_{21,j}$ ein Differenzwert des Netzknotens 21 zum Zeitpunkt j und $\delta_{22,j}$ ein Differenzwert des Netzknotens 22 zum Zeitpunkt j an. N gibt die Anzahl der Differenzwerte an, die zur Mittelwertbildung berücksichtigt werden.

Enthält das drahtlose Netzwerk mehrere Sub-Netzwerke lassen sich die Netzknoten des Sub-Netzwerks, welches nicht den Anwendermaster-Netzknoten enthält, mit Hilfe eines Brücken-Netzknotens, der mit den Netzknoten der Sub-Netzwerke Daten über Funkstrecken austauschen kann, auf den Masteranwendertakt synchronisieren. Ein drahtloses Netzwerk mit zwei Sub-Netzwerken, die über einen Brücken-Netzknoten 24 miteinander verbunden sind, zeigt Fig. 7. Das erste Sub-Netzwerk enthält außer dem Brücken-Netzknoten 24 den zentralen Netzknoten 25, den Anwendermaster-Netzknoten 26 und die normalen Netzknoten 27 und 28. Der Bereich, in dem der zentrale Netzknoten 25 Daten mit den anderen Netzknoten 24, 26, 27 und 28 austauschen kann, ist durch eine Ellipse 29 in der Fig. 7 angedeutet. Das zweite Sub-Netzwerk in Fig. 7 enthält außer dem Brücken-Netzknoten 24 einen zentralen Netzknoten 30 und zwei normale Netzknoten 31 und 32. Die in Fig. 7 eingezeichnete Ellipse 33 gibt den Bereich an, in dem ein Datenaustausch des zentralen Netzknotens 30 mit anderen Netzknoten möglich ist.

Der Brücken-Netzknoten 24, der bei den zentralen Netzknoten 25 und 30 der beiden Sub-Netzwerke registriert ist, enthält eine Funkvorrichtung mit entweder einem oder zwei Funkzweigen. Ein solcher Funkzweig besteht aus den in Fig. 3 gezeigten Schaltelementen. Falls die Funkvorrichtung des Brücken-Netzknotens zwei Funkzweige enthält besteht eine dauernde Verbindung mit beiden Sub-Netzwerken 29 und 33. Im anderen Fall mit einem Funkzweig in der Funkvorrichtung des Brücken-Netzknotens 24 besteht entweder eine Verbindung mit dem ersten oder dem zweiten Sub-Netzwerk. Die Verbindungszeit des Brücken-Netzknotens 24 mit den Sub-Netzwerken kann jeweils gleich oder unterschiedlich sein. Die Verwendung einer Funkvorrichtung mit einem Funkzweig in dem Brücken-Netzknoten 24 hat den Vorteil eines geringeren Schaltungsaufwandes.

Es sei angenommen, dass die Anwendertaktversorgung des Brücken-Netzknoten bereits mit dem Masteranwendertakt nach der oben beschriebenen Methode synchronisiert ist. Der Brücken-Netzknoten 24 bildet dann für das zweite Sub-Netzwerk mit dem zentralen Netzknoten 30 den Netzknoten nach, welches den Masteranwendertakt liefert. Zuerst wird nach der oben beschriebenen Methode die Anwendertaktversorgung des zentralen Netzknotens 30 auf den Anwendertakt des Brücken-Netzknotens 24 synchronisiert. Dabei nutzt der Brücken-Netzknoten 24 die Funksynchronisationszeichen des zentralen Netzknotens 30 als ein Ereignis zur Bildung der Differenz $\delta_{24} = R2(N_{24}) - R1(N_{24})$ aus und sendet während der Verbindungszeit mit dem zentralen Netzknoten 30 während eines MAC-Rahmens das Differenzergebnis $\delta_{24} = R2(N_{24}) - R1(N_{24})$ als weitere Zeitdaten an den zentralen Netzknoten 30. Diese weiteren Zeitdaten werden dann von dem zentralen Netzknoten 30 an alle anderen Netzknoten 31 und 32 im Sub-Netzwerk 33 verteilt. Dabei wird vorausgesetzt, dass alle anderen Netzknoten 30 bis 32 im Sub-Netzwerk 33 bei Vorliegen des gleichen Ereignisses wie beim Brücken-Netzknoten den Zeitwert $R1(N_i)$ bzw. $R2(N_i)$ aus dem jeweiligen Anwenderzeitzähler auslesen und die Differenz $\delta_i = R2(N_i) - R1(N_i)$ mit i = 30, 31 und 32 bilden. Hierbei wird der Zeitabstand zwischen dem Start eines Funksynchronisationszeichens und dem Maximalwert des sich aus dem Funksynchronisationszeichen ergebenden Funksynchronisationsimpulses beim zentralen Netzknoten 30 berücksichtigt, weil der zentrale Netzknoten 30 in der Regel nicht gleichzeitig senden und empfangen kann. Durch den hier beschriebenen Vergleich der Differenz der Zeitwerte der Netzknoten 30 bis 32 mit der Differenz der Zeitwerte des Brükken-Netzknotens 24 ist eine Synchronisation der Anwendertakte jedes Netzknotens 30 bis 32 im Sub-Netzwerk 33 möglich.

Im Falle eines Funkzweiges in der Funkvorrichtung des Brücken-Netzknotens sollte die Verbindungszeit mit einem Sub-Netzwerk eine bestimmte Zeitdauer nicht überschreiten, damit eine gute Genauigkeit der Synchronisation für das andere Sub-Netzwerk gewährleistet ist. Vorteilhaft ist beispielsweise eine gleichmäßige Verbindungzeit der jeweiligen Sub-Netzwerke für jeweils zwei MAC-Rahmen.

Die für zwei Sub-Netzwerke beschriebene Methode zur Zeit- und Frequenzsynchronisation der Anwendertaktversorgungen in einem Sub-Netzwerk, welches nicht den Anwendermaster-Netzknoten enthält, lässt sich auch auf weitere, in dem drahtlosen Netzwerk enthaltene Sub-Netzwerke übertragen. Diese Sub-Netzwerke, die jeweils von einem zentralen Netzknoten gesteuert werden, erhalten über einen Brücken-Netzknoten aus einem anderen Sub-Netzwerk die erforderlichen Daten. Damit können die weiteren Sub-Netzwerke nach dem oben beschriebenen Schema sukzessive die Zeitdaten des Anwendermaster-Netzknotens erhalten.

Auch für die Netzknoten 30 bis 32 des zweiten Sub-Netzwerks lässt sich eine Mittelwertbildung durchführen. Für jeden Netzknoten i (i = 30, 31, 32) des zweiten Sub-Netzwerks ergibt sich folgende Formel:

$$\frac{\Delta_i - \Delta_{24}}{\Delta_{24}} = \frac{\left[\left(\sum_{j=n-N}^{n-1} \delta_{i,j}\right) + \delta_{i,n}\right] - \left[\left(\sum_{j=n-N}^{n-1} \delta_{24,j}\right) + \delta_{24,n}\right]}{\left(\sum_{j=n-N}^{n-1} \delta_{24,j}\right) + \delta_{24,n}}$$

Hierbei ist $\Delta_{24}$ die Summe der Differenzwerte des Brücken-Netzknotens 24, $\Delta_i$ (i = 30, 31, 32) die Summe der Differenzwerte eines Netzknotens i, $\delta_{24,j}$ ein Differenzwert des Brücken-Netzknotens 24 zum Zeitpunkt j und $\delta_{i,j}$ ein Differenzwert des Netzknotens i zum Zeitpunkt j. N gibt die Anzahl der Differenzwerte an, die zur Mittelwertbildung berücksichtigt werden.

Mit einer im folgenden zu beschreibenden Methode, ist es möglich, einem Netzknoten auf die absolute Zeit des Anwendermaster-Netzknotens zu synchronisieren. Eine solche absolute Zeit ist häufig erforderlich, weil zu bestimmten auf die absolute Zeit bezogenen Zeitpunkten Aktionen durchzuführen sind. Beispielsweise muss dann der Anwendermaster-Netzknoten 2 in dem drahtlosen Netzwerk nach Fig. 1 nicht nur den Differenzwert $\delta_2$ über eine Einzelverbindung als Zeitdaten an den zentralen Netzknoten 1 übertragen, sondern dieser muss auch den im zweiten Register enthaltenen Wert $R2(N_2)$ nach der Korrektur mit dem Verzögerungszeit $\tau$ als absoluter Zeitwert $R2'(N_2) = R2(N_2) - \tau$ senden. Dieser Wert $R2'(N_2)$ wird von dem zentralen Netzknoten 1 an die normalen Netzknoten 3 und 4 verteilt. Nach dem Erhalt dieser absoluten Zeitdaten $R2'(N_2)$ vergleichen der zentrale Netzknoten 1 und die normalen Netzknoten 3 und 4 den in ihren jeweiligen zweiten Register gespeicherten Zeitwert $R2'(N_i)$ mit i = 1, 3 oder 4 mit dem empfangenen vom Anwendermaster-Netzknoten 2 stammenden Zeitpunkt $R2'(N_2)$. Ist $R2'(N_2) \neq R2'(N_i)$ mit i = 1, 3 oder 4, dann muss der Wert TC des jeweiligen Anwenderzeitzählers korrigiert werden. Das bedeutet, dass der korrigierte Wert $TC_{neu}$ eines Anwenderzeitzählers nach folgender Formel beispielsweise von der Schnittstellenschaltung 12 berechnet wird.

$$TC_{neu} = TC_{alt} + R2'(N_2) - R2'(N_i),$$

wobei $TC_{alt}$ der aktuelle Wert des Anwenderzeitzählers vor der Korrektur in dem Netzknoten i und i = 1, 3 oder 4 ist. Die Synchronisation beispielsweise in einem normalen Netzknoten 3 oder 4 auf die absolute Zeit des Anwendermaster-Netzknotens 2 muss nach der Frequenzsynchronisation der zugeordneten Anwendertaktversorgung auf die Anwendertaktversorgung des Anwendermaster-Netzknotens 2 erfolgen.

Eine Synchronisation eines versteckten Netzknotens mit Hilfe des frequenz- und zeitsynchronisierten Zwischen-Netzknotens (vgl. Fig. 6) und eines Netzknotens in einem zweiten Sub-Netzwerk mit Hilfe eines Brücken-Netzknotens (vgl. Fig. 7) auf die absolute Zeit des Anwendermaster-Netzknotens 2 ist auf die gleiche Weise nach der Frequenzsynchronisation des jeweiligen Netzknotens auf die absolute Zeit möglich. Hierbei gilt die folgende Formel:

$$TC_{neu} = TC_{alt} + R2'(N_r) - R2'(N_i),$$

wobei R2'($N_r$) der von einem netzknotenspezifischen Korrekturwert veränderte zuletzt ausgesendete Zeitwert des frequenzsynchronisierten Brücken-Netzknotens ist.

Bei größeren Entfernungen zwischen den Netzknoten muss bei der Berechnung der absoluten Zeit die Ausbreitungsverzögerung zwischen den Netzknoten berücksichtigt werden. Diese kann beispielsweise durch die Messung der Laufzeit von Testsignalen zwischen den Netzknoten ermittelt werden.

## Patentansprüche

1. Drahtloses Netzwerk mit mehreren Netzknoten mit jeweils einer Funkvorrichtung, welche jeweils eine Funktaktversorgung enthält und welche jeweils zum Datenaustausch über ein drahtloses Medium vorgesehen sind, und mit einer Anwenderschnittstelle zum Datenaustausch der zugeordneten Funkvorrichtung mit wenigstens einer Anwendung,
   dadurch gekennzeichnet,

   dass wenigstens eine Anwendung eines Netzknotens einen vom Funktakt unabhängigen Anwendertakt von einer Anwendertaktversorgung des jeweiligen Netzknotens erhalten,
   dass jeder Netzknoten zu von einem zentralen Netzknoten vorgegebenen Ereignissen zur Ermittlung eines auf den jeweiligen Anwendertakt bezogenen Zeitwerts vorgesehen ist,
   dass der zentrale Netzknoten wenigstens zur Aussendung des zuletzt gebildeten Zeitwerts eines ausgewählten Netzknotens vorgesehen ist und
   dass jeder Netzknoten zur Bildung der Differenz der beiden zuletzt ermittelten Zeitwerte vorgesehen ist und zur Frequenzsynchronisation seiner Anwendertaktversorgung in Abhängigkeit vom Vergleich der Differenz seiner beiden zuletzt ermittelten Zeitwerte mit der Differenz der beiden letzten Zeitwerte des ausgewählten Netzknotens vorgesehen ist.

2. Drahtloses Netzwerk nach Anspruch 1,
   dadurch gekennzeichnet,

   dass der zentrale Netzknoten

   - zu bestimmten Zeitpunkten zur Aussendung von Funksynchronisationszeichen,
   - zur Verschiebung des nach Aussenden des vorherigen Funksynchronisationszeichen ausgelesenen Zeitwerts von einem zweiten in ein erstes Register und
   - zu einem Zeitpunkt, der dem Maximalwert des aus einem Funksynchronisationszeichens gebildeten Funksynchronisationsimpulses in einem anderen Netzknoten entspricht, zur Auslesung des Zeitwerts aus einem zugeordneten Anwenderzeitzähler und danach zur Zwischenspeicherung in das zweite Register vorgesehen ist und

   dass ein anderer Netzknoten

   - zur Bildung eines Funksynchronisationsimpulses, dessen Maximalwert das vorgegebene Ereignis darstellt, aus dem empfangenden Funksynchronisationszeichen,
   - nach Auftreten des Maximalwertes des Funksynchronisationsimpulses zum Auslesen eines Zeitwertes aus einem zugeordneten Anwenderzeitzähler und
   - zur Verschiebung des beim vorherigen Funksynchronisationszeichen ausgelesenen Zeitwerts von einem zweiten in ein erstes Register und
   - zur Zwischenspeicherung des zuletzt aus dem Anwenderzeitzähler ausgelesenen Zeitwerts in das zweite Register vorgesehen ist.

3. Drahtloses Netzwerk nach Anspruch 1,
   dadurch gekennzeichnet,

   dass der zentrale Netzknoten

   - nicht die Funktion des als Anwendermaster-Netzknoten bezeichneten ausgewählten Netzknotens aufweist,
   - zur Aussendung von Zeitdaten, die das Differenzergebnis der zuletzt gebildeten Zeitwerte im Anwendermaster-Netzknoten enthalten, vorgesehen ist und

dass jeder Netzknoten nach der Aussendung der Zeitdaten zur Bildung des Vergleichs zwischen dem eigenen Differenzergebnis und dem Differenzergebnis des Anwendermaster-Nerzknotens vorgesehen ist.

**4.** Drahtloses Netzwerk nach Anspruch 3,
<u>dadurch gekennzeichnet,</u>

dass ein Netzknoten zur Frequenzkorrektur seiner Anwendertaktversorgung um den Wert $(\delta_i - \delta_r)/\delta_r$ vorgesehen ist, wenn eine Abweichung der Differenzergebnisse vorliegt, wobei $\delta_i$ ein Differenzergebnis eines Netzknotens i und $\delta_r$ ein Differenzergebnis des Anwendermaster-Netzknotens r (i $\neq$ r) ist.

**5.** Drahtloses Netzwerk nach Anspruch 4,
<u>dadurch gekennzeichnet,</u>

dass ein Netzknoten zur Frequenzkorrektur seiner Anwendertaktversorgung um den Wert $(\Delta_i - \Delta_r)/\Delta_r$ vorgesehen ist, wenn eine Abweichung der Differenzergebnisse vorliegt, wobei

$$\frac{\Delta_i - \Delta_r}{\Delta_r} = \frac{\left[\left(\sum_{j=n-N}^{n-1}\delta_{i,j}\right)+\delta_{i,n}\right]-\left[\left(\sum_{j=n-N}^{n-1}\delta_{r,j}\right)+\delta_{r,n}\right]}{\left(\sum_{j=n-N}^{n-1}\delta_{r,j}\right)+\delta_{r,n}}$$

ist, $\delta_{i,j}$ ein Differenzergebnis zum Zeitpunkt j des Netzknotens i, $\delta_{r,j}$ ein Differenzergebnis zum Zeitpunkt j des Anwendermaster-Netzknotens r (i $\neq$ r) und N die Anzahl der Differenzergebnisse ist.

**6.** Drahtloses Netzwerk nach Anspruch 1,
<u>dadurch gekennzeichnet,</u>

dass ein als versteckter Netzknoten bezeichneter keine Daten vom zentralen Netzknoten empfangender Netzknoten, ebenfalls eine Anwendertaktversorgung enthält,
dass der versteckte Netzknoten zu von einem frequenzsynchronisierten Netzknoten, der als Zwischen-Netzknoten bezeichnet wird, vorgegebenen speziellen Ereignissen zur Ermittlung eines auf den jeweiligen Anwendertakt bezogenen Zeitwerts vorgesehen ist,
dass der Zwischen-Netzknoten wenigstens zur Aussendung des bei dem speziellen Ereignis zuletzt gebildeten eigenen Zeitwerts vorgesehen ist und
dass der versteckte Netzknoten zur Bildung der Differenz der beiden zuletzt ermittelten Zeitwerte vorgesehen ist und zur Frequenzsynchronisation seiner Anwendertaktversorgung in Abhängigkeit vom Vergleich der Differenz seiner beiden zuletzt ermittelten Zeitwerte mit der Differenz der beiden letzten Zeitwerte des Zwischen-Netzknotens vorgesehen ist.

**7.** Drahtloses Netzwerk nach Anspruch 6,
<u>dadurch gekennzeichnet,</u>

dass ein versteckter Netzknoten zur Frequenzkorrektur seiner Anwendertaktversorgung um den Wert $(\delta_i - \delta_r)/\delta_r$ vorgesehen ist, wenn eine Abweichung der Differenzergebnisse vorliegt, wobei $\delta_i$ ein Differenzergebnis eines versteckten Netzknotens i und $\delta_r$ das Differenzergebnis des frequenzsynchronisierten Zwischen-Netzknotens r (i $\neq$ r) ist.

**8.** Drahtloses Netzwerk nach Anspruch 7,
<u>dadurch gekennzeichnet,</u>

dass ein versteckter Netzknoten zur Frequenzkorrektur seiner Anwendertaktversorgung um den Wert $(\Delta_i - \Delta_r)/\Delta_r$ vorgesehen ist, wenn eine Abweichung der Differenzergebnisse vorliegt, wobei

$$\frac{\Delta_i - \Delta_r}{\Delta_r} = \frac{\left[\left(\sum_{j=n-N}^{n-1}\delta_{i,j}\right)+\delta_{i,n}\right] - \left[\left(\sum_{j=n-N}^{n-1}\delta_{r,j}\right)+\delta_{r,n}\right]}{\left(\sum_{j=n-N}^{n-1}\delta_{r,j}\right)+\delta_{r,n}}$$

ist, $\delta_{i,j}$ ein Differenzergebnis zum Zeitpunkt j des versteckten Netzknotens i, $\delta_{r,j}$ ein Differenzergebnis zum Zeitpunkt j des frequenzsynchronisierten Zwischen-Netzknotens r (i ≠ r) und N die Anzahl der Differenzergebnisse ist.

**9.** Drahtloses Netzwerk nach Anspruch 1,
   <u>dadurch gekennzeichnet,</u>

   dass bestimmte vom zentralen Netzknoten direkt erreichbare Netzknoten zusammen mit dem zentralen Netzknoten ein erstes Sub-Netzwerk und weitere Netzknoten mit einem weiteren zentralen Netzknoten ein zweites Sub-Netzwerk bilden,
   dass ein beiden Sub-Netzwerken zugeordneter Netzknoten, der als Brücken-Netzknoten bezeichnet wird, zum Austausch von Daten mit beiden Sub-Netzwerken vorgesehen ist,
   dass die Netzknoten des zweiten Sub-Netzwerks ebenfalls jeweils eine Anwendertaktversorgung enthalten,
   dass jeder Netzknoten des zweiten Sub-Netzwerks zu von dem weiteren zentralen Netzknoten vorgegebenen Ereignissen zur Ermittlung eines auf den jeweiligen Anwendertakt bezogenen Zeitwerts vorgesehen ist,
   dass der weitere zentrale Netzknoten wenigstens zur Aussendung des bei dem vorgegebenen Ereignis des weiteren zentralen Netzknotens zuletzt gebildeten Zeitwerts des frequenzsynchronisierten Brücken-Netzknotens vorgesehen ist und
   dass jeder Netzknoten des zweiten Sub-Netzwerks zur Bildung der Differenz der beiden zuletzt ermittelten Zeitwerte vorgesehen ist und zur Frequenzsynchronisation seiner Anwendertaktversorgung in Abhängigkeit vom Vergleich der Differenz seiner beiden zuletzt ermittelten Zeitwerte mit der Differenz der beiden letzten Zeitwerte des Brücken- Netzknotens vorgesehen ist.

**10.** Drahtloses Netzwerk nach Anspruch 9,
   <u>dadurch gekennzeichnet,</u>

   dass ein Netzknoten des zweiten Sub-Netzwerks zur Frequenzkorrektur seiner Anwendertaktversorgung um den Wert $(\delta_i - \delta_r)/\delta_r$ vorgesehen ist, wenn eine Abweichung der Differenzergebnisse vorliegt, wobei $\delta_i$ ein Differenzergebnis eines Netzknotens i des zweiten Sub-Netzwerks und $\delta_r$ das Differenzergebnis des frequenzsynchronisierten Brücken-Netzknotens r (i ≠ r) ist.

**11.** Drahtloses Netzwerk nach Anspruch 10,
   <u>dadurch gekennzeichnet,</u>

   dass ein Netzknoten des zweiten Sub-Netzwerks zur Frequenzkorrektur seiner Anwendertaktversorgung um den Wert $(\Delta_i - \Delta_r)/\Delta_r$ vorgesehen ist, wenn eine Abweichung der Differenzergebnisse vorliegt, wobei

$$\frac{\Delta_i - \Delta_r}{\Delta_r} = \frac{\left[\left(\sum_{j=n-N}^{n-1}\delta_{i,j}\right)+\delta_{i,n}\right] - \left[\left(\sum_{j=n-N}^{n-1}\delta_{r,j}\right)+\delta_{r,n}\right]}{\left(\sum_{j=n-N}^{n-1}\delta_{r,j}\right)+\delta_{r,n}}$$

ist, $\delta_{i,j}$ ein Differenzergebnis zum Zeitpunkt j des Netzknotens i des zweiten Sub-Netzwerks, $\delta_{r,j}$ ein Differenzergebnis zum Zeitpunkt j des frequenzsynchronisierten Brücken-Netzknotens r (i ≠ r) und N die Anzahl der Differenzergebnisse ist.

12. Drahtloses Netzwerk nach Anspruch 1,
dadurch gekennzeichnet,

dass zur Korrektur seiner absoluten Zeit ein Netzknoten zur Einstellung seines Zeitwerte liefernden Anwenderzeitzählers auf den Wert

$$TC_{neu} = TC_{alt} + R2'(N_r) - R2'(N_i)$$

vorgesehen ist, wobei $TC_{alt}$ der aktuelle Wert des Anwenderzeitzählers vor der Korrektur, $TC_{neu}$ der korrigierte Wert des Anwenderzeitzählers, $R2'(N_r)$ der um einen netzknotenspezifischen Korrekturwert veränderte zuletzt ausgesendete Zeitwert des ausgewählten Netzknotens und $R2'(N_i)$ der um einen netzknotenspezifischen Korrekturwert veränderte Zeitwert eines Netzknotens i (i ≠ r) ist und
dass der jeweilige netzknotenspezifische Korrekturwert die verarbeitungsbedingte Verzögerung zwischen dem Auslesezeitpunkt des Anwenderzeitzählers und dem Maximalwert des aus dem Funksynchronisationszeichen gebildeten Funksynchronisationsimpulses in dem betreffenden Netzknoten berücksichtigt.

13. Drahtloses Netzwerk nach Anspruch 6,
dadurch gekennzeichnet,

dass zur Korrektur seiner absoluten Zeit ein versteckter Netzknoten zur Einstellung seines Zeitwerte liefernden Anwenderzeitzählers auf den Wert

$$TC_{neu} = TC_{alt} + R2'(N_r) - R2'(N_i)$$

vorgesehen ist, wobei $TC_{alt}$ der aktuelle Wert des Anwenderzeitzählers vor der Korrektur, $TC_{neu}$ der korrigierte Wert des Anwenderzeitzählers, $R2'(N_r)$ der um einen netzknotenspezifischen Korrekturwert veränderte zuletzt ausgesendete Zeitwert des frequenzsynchronisierten Zwischen-Netzknotens und $R2'(N_i)$ der um einen netzknotenspezifischen Korrekturwert veränderte Zeitwert eines versteckten Netzknotens i (i ≠ r) ist und
dass der jeweilige netzknotenspezifische Korrekturwert die verarbeitungsbedingte Verzögerung zwischen dein Auslesezeitpunkt des Anwenderzeitzählers und dem Maximalwert des aus dem Funksynchronisationszeichen gebildeten Funksynchronisationsimpulses in dem betreffenden Netzknoten berücksichtigt.

14. Drahtloses Netzwerk nach Anspruch 9,
dadurch gekennzeichnet,

dass zur Korrektur seiner absoluten Zeit ein Netzknoten eines zweiten Stab-Netzwerkes zur Einstellung seines Zeitwerte liefernden Anwenderzeitzählers auf den Wert

$$TC_{neu} = TC_{alt} + R2'(N_r) - R2'(N_i)$$

vorgesehen ist, wobei $TC_{alt}$ der aktuelle Wert des Anwenderzeitzählers vor der Korrektur, $TC_{neu}$ der korrigierte Wert des Anwenderzeitzählers, $R2'(N_r)$ der um einen netzknotenspezifischen Korrekturwert veränderte zuletzt ausgesendete Zeitwert des frequenzsynchronisierten Brücken-Netzknotens und $R2'(N_i)$ der um einen netzknotenspezifischen Korrekturwert veränderte Zeitwert eines Netzknotens i (i ≠ r) des zweiten Stab-Netzwerks ist und
dass der jeweilige netzknotenspezifische Korrekturwert die verarbeitungsbedingte Verzögerung zwischen dem Auslesezeitpunkt des Anwenderzeitzählers und dem Maximalwert des aus dem Funksynchronisationszeichen gebildeten Funksynchronisationsimpulses in dem betreffenden Netzknoten berücksichtigt.

FIG. 1

FIG. 2

FIG. 3

FIG. 4

FIG. 5

FIG. 6

FIG. 7